# EUROPÄISCHE PATENTSCHRIFT

(11) **EP 0 777 593 B1**
(45) Veröffentlichungstag und Bekanntmachung des Hinweises auf die Patenterteilung: **03.03.1999**
(21) Anmeldenummer: 95928982.8
(22) Anmeldetag: 25.08.1995
(51) Int. Cl.: B60S 1/08, H02H 7/085

(54) **SCHEIBENWISCHVORRICHTUNG**
WINDSCREEN WIPER DEVICE
SYSTEME D'ESSUIE-GLACE

(30) Priorität: 06.09.1994 DE 4431699
(43) Veröffentlichungstag der Anmeldung: 11.06.1997
(73) Patentinhaber: ROBERT BOSCH GMBH, 70442 Stuttgart (DE)
(72) Erfinder: MACK, Rolf, D-76547 Sinzheim (DE); KOCH, Stefan, D-77833 Ottersweier (DE)
(86) Internationale Anmeldenummer: DE9501134
(87) Internationale Veröffentlichungsnummer: WO9607566

(56) Entgegenhaltungen:
- DE-A- 4 032 922
- DE-A- 4 104 565
- US-A- 5 049 794
- PATENT ABSTRACTS OF JAPAN vol. 013 no. 244 (M-834) ,7.Juni 1989 & JP,A,01 052557 (TOYOTA MOTOR CORP ET AL) 28.Februar 1989,
- PATENT ABSTRACTS OF JAPAN vol. 014 no. 410 (M-1020) ,5.September 1990 & JP,A,02 158446 (ASMO CO LTD ET AL) 18.Juni 1990,

## Beschreibung

### Stand der Technik

Die Erfindung geht aus von einer Scheibenwischvorrichtung nach der Gattung des Hauptanspruchs. Aus der DE-OS 40 32 922 ist eine Vorrichtung zum Wischen einer Scheibe bekannt, bei der die Positionen der Wischarme in Abhängigkeit von vorgegebenen Sollpositionen jeweils mit einem Regler geregelt sind. Eine Überlastung oder eine Blockierung eines Wischarms wird durch Überschreiten einer vorgegebenen Grenze einer Stellgröße detektiert. Nach dem Erkennen eines Überlastzustands können unterschiedliche Maßnahmen vorgesehen sein mit dem Ziel, einen eingeschränkten Wischbetrieb aufrechtzuerhalten. Ein solcher Überlastzustand tritt beispielsweise durch eine Schneelast auf. Die bekannte Vorrichtung enthält für jeden Wischarm eine Positionsmeßeinrichtung. Ein eingeschränkter Wischbetrieb kann durch Wischversuche festgelegt werden, wobei die Positionen der Wischgrenzen durch die Positionsmeßeinrichtungen bekannt sind.

In der JP-A-1052557 ist eine Scheibenwischvorrichtung offenbart, bei der eine Zeitvorgabe vorgesehen ist, die das Überschreiten einer fest vorgegebenen Zeit überwacht. Eine Zeitüberschreitung tritt auf, wenn der Wischarm eine vorgegebene Endlage nicht mehr rechtzeitig erreicht. In diesem Fall wird die Drehrichtung des Antriebsmotors reversiert.

Der Erfindung liegt die Aufgabe zugrunde, eine Scheibenwischvorrichtung anzugeben, die mit einfachen Mitteln im Falle einer ortsabhängigen Überlastung einen eingeschränkten Wischbetrieb ermöglicht.

Die Aufgabe wird durch die im Hauptanspruch angegebenen Merkmale gelöst.

### Vorteile der Erfindung

Die erfindungsgemäße Scheibenwischvorrichtung ist abgestellt auf eine Wischanlage, die von einem Elektromotor angetrieben ist, dessen Drehrichtung änderbar ist. Die erfindungsgemäße Scheibenwischvorrichtung weist den Vorteil auf, daß zur Durchführung eines eingeschränkten Wischbetriebs im Falle einer ortsabhängigen Überlastung keine aufwendigen Einrichtungen zum Messen der Position des Wischers erforderlich sind. Erfindungsgemäß ist eine Zeitermittlung vorgesehen, welche die Zeit nach dem Auslösen eines Wischvorgangs ermittelt. Weiterhin ist eine Zeitvorgabeanordnung vorhanden, die eine maximal zulässige Zeit für einen halben Wischzyklus von Endlage zu Endlage vorgibt. Ein Vergleicher, der die maximal zulässige Zeit mit der ermittelten Zeit vergleicht, löst bei einer festgestellten Zeitüberschreitung einen Wischvorgang in entgegengesetzter Richtung zum vorangegangenen Wischvorgang aus. Mit diesen Maßnahmen ist ein eingeschränkter Wischbetrieb bei einer Überlastung, beispielsweise durch Schnee, möglich, wobei eine Umsteuerung des den Wischer antreibenden Elektromotors stets nach Ablauf der vorgegebenen maximalen Zeit erfolgt. Die Endlagen brauchen nicht mehr erreicht zu werden. Bei Wegfall des Überlastzustands ist eine Rückkehr zum normalen Wischbetrieb von Endlage zu Endlage ohne weitere Maßnahmen sichergestellt.

Die Zeitermittlung ermittelt nach einem vom Vergleicher ausgelösten Umsteuervorgang die Zeit bis der Wischer wieder eine Endlage erreicht hat, sofern er die Endlage erreichen kann. Die ermittelte Zeit wird besonders vorteilhaft bei der Festlegung der neuen maximal zulässigen Zeit für den nächsten Wischvorgang verwendet. Die Reduzierung der maximal zulässigen Zeit verkürzt die Wartezeit bis zur Umsteuerung des Wischers an der Blockierposition.

Vorteilhafte Ausgestaltungen und Weiterbildungen der erfindungsgemäßen Scheibenwischvorrichtung ergeben sich aus abhängigen Ansprüchen.

Eine vorteilhafte Weiterbildung sieht die Vorgabe von Zusatzzeiten jedesmal dann vor, wenn ein unvollständiger Wischzyklus ohne Erreichen einer Endlage aufgetreten ist. Mit dieser Maßnahme werden die Fälle berücksichtigt, bei denen entweder eine zuvor aufgetretene Blockierung vollständig entfällt oder durch eine zusätzliche Blockierung beide Endlagen nicht mehr erreicht werden können. Die Vorgabe von Zusatzzeiten stellt einen Übergang bei Wegfall der Blockierung vom eingeschränkten Wischbetrieb zu einem vollständigen Wischzyklus sicher. Vorzugsweise ist ein Zähler vorgesehen, der bei jeder Zeitüberschreitung inkrementiert und bei jedem Erreichen einer Endlage gelöscht wird. Die Anzahl der Zusatzzeiten kann dann entsprechend dem Zählerstand vorgegeben werden. Eine Ausgestaltung sieht vor, daß die Vorgabe von Zusatzzeiten auf eine insgesamt maximal zulässige Zeit begrenzt wird, die beispielsweise einer ursprünglichen maximal zulässigen Zeit entspricht, die für das normale Reinigen einer Scheibe veranschlagt wird. Eine vorteilhafte Ausgestaltung sieht vor, daß nach dem Erreichen der ursprünglichen maximal zulässigen Zeit, ohne daß der Überlastzustand inzwischen beseitigt ist, wieder auf die verkürzte maximal zulässige Zeit zurückgegangen wird, die nach dem Auftreten der ersten Blockierung bei Erreichen der Endlage festgelegt wurde. Diese Maßnahme reduziert periodisch die Wartezeit bis zur Umsteuerung des Wischerarms an den Blockierpositionen.

Eine vorteilhafte Ausgestaltung sieht vor, daß der eingeschränkte Wischbetrieb auf eine vorgegebene Restwischfeldgröße begrenzt ist. Bei einem Unterschreiten der Restwischfeldgröße, die durch Zeitermittlung festgestellt werden kann, ist beispielsweise ein vollständiges Abschalten des Wischbetriebs vorgesehen.

Eine zweckmäßige Weiterbildung sieht vor, daß die Antriebsleistung des Elektromotors bei einem festgestellten Überlastzustand reduziert wird, um den Antrieb zu schonen. Eine solche Reduzierung sieht beispielsweise die Reduzierung um eine Leistungsstufe bei mehreren vorgebbaren Leistungsstufen vor.

Weitere vorteilhafte Weiterbildungen und Ausgestaltungen der erfindungsgemäßen Scheibenwischvorrichtung ergeben sich aus weiteren abhängigen Ansprüchen und aus der folgenden Beschreibung.

### Zeichnung

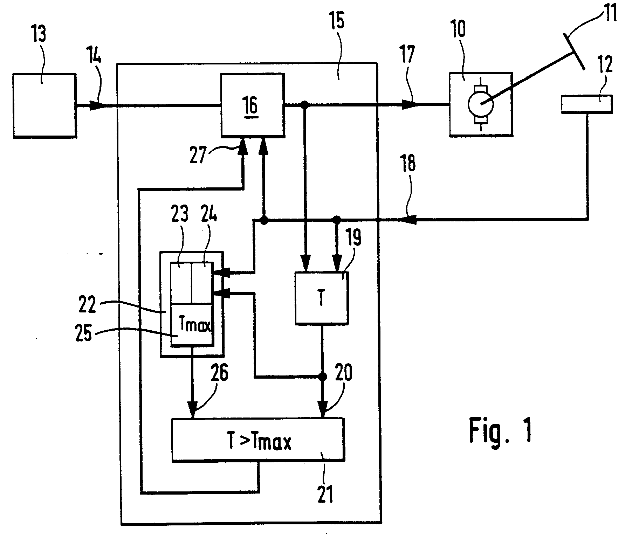

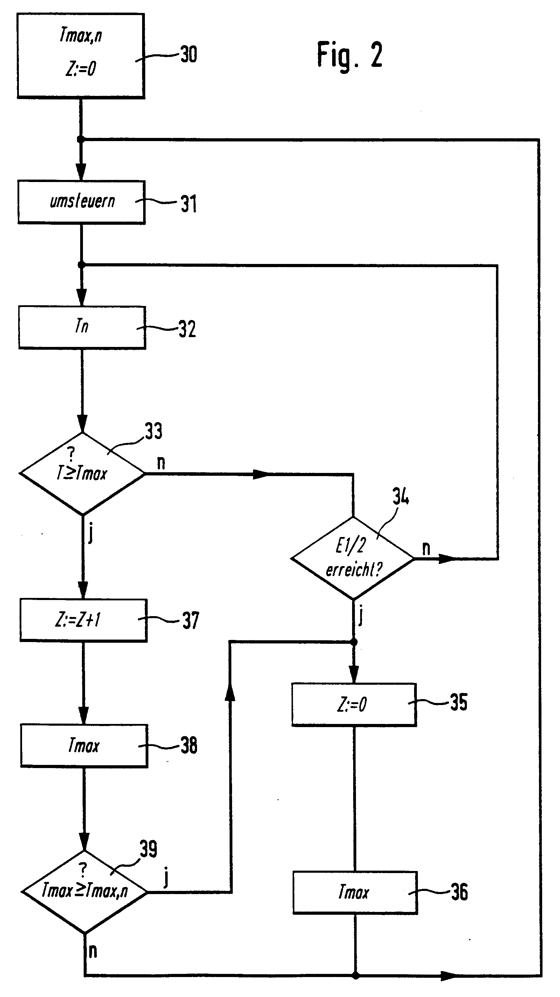

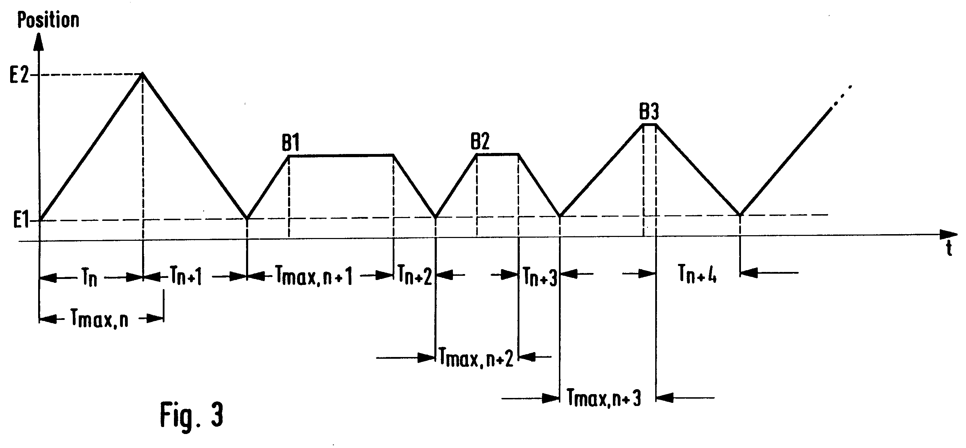

Figur 1 zeigt ein Blockschaltbild einer erfindungsgemäßen Scheibenwischvorrichtung, Figur 2 zeigt ein Flußdiagramm eines Verfahrens, das in der Scheibenwischvorrichtung abläuft und Figur 3 zeigt ein Beispiel eines Positionsverlaufs eines Wischarms in Abhängigkeit von der Zeit.

Figur 1 zeigt einen Elektromotor 10, der einen Wischarm 11 antreibt, dessen beide Endlagen auf einer nicht näher gezeigten Scheibe von einem Endlagensensor 12 erfaßt werden. Unterschiedliche Betriebsarten des Wischarms 11 werden von einer Eingabevorrichtung 13 ausgewählt, die ein Betriebsartensignal 14 an eine signalverarbeitende Anordnung 15 abgibt.

Die signalverarbeitende Anordnung 15 enthält eine Steueranordnung 16, die ein Einschaltsignal 17 an den Elektromotor 10 abgibt. Die Steueranordnung 16 erhält ein vom Endlagensensor 12 bereitgestelltes Endlagensignal 18 zugeführt, das weiterhin einer Zeitermittlung 19 sowie einer Zeitvorgabeanordnung 22 zugeleitet ist. Ein weiteres Eingangssignal der Zeitermittlung 19 ist das Einschaltsignal 17, das die Steueranordnung 16 an den Elektromotor 10 abgibt. Die Zeitermittlung 19 gibt ein Ergebnissignal 20 sowohl an einen Vergleicher 21 als auch an die Zeitvorgabeanordnung 22 ab. Die Zeitvorgabeanordnung 22 enthält eine Zusatzzeitvorgabe 23, einen Zähler 24 sowie eine Vergleichszeitvorgabe 25, die eine Vergleichszeit 26 an den Vergleicher 21 abgibt. Der Vergleicher 21 stellt ein Zeitüberschreitungssignal 27 bereit, das als Eingangssignal der Steueranordnung 16 zugeführt ist.

Die Arbeitsweise der in Figur 1 gezeigten Vorrichtung wird anhand des in Figur 2 gezeigten Flußdiagramms und anhand des in Figur 3 gezeigten Positionsverlaufs des Wischers 11 in Abhängigkeit von der Zeit t näher erläutert:

Das in Figur 2 gezeigte Flußdiagramm beginnt mit einer ersten Zuweisung 30, welche eine Festlegung der auf eine ursprüngliche maximal zulässige Zeit T_{max, n} für einen halben Wischzyklus vorsieht. Die maximal zulässige Zeit T_{max,n} ist ausreichend zu bemessen für einen normalen Wischvorgang, der von einer Endlage zur anderen Endlage reicht. Die Endlagen sind in Figur 3 mit E1, E2 bezeichnet. Weiterhin wird in der ersten Zuweisung 30 der Zähler 24 auf Null zurückgesetzt (Z: = 0).

Nach dem Auslösen eines entsprechenden Betriebsartensignals 14 durch die Eingabevorrichtung 13 wird beispielsweise ein dauernder Wischbetrieb veranlaßt. In einer zweiten Zuweisung 31 gibt die Steueranordnung 16 ein Einschaltsignal 17 an den Elektromotor 10 ab, das einen Umsteuervorgang bewirkt. Beginnend bei der einen Endlage E1, führt der Wischarm 11 einen halben Wischzyklus bis zum Erreichen der anderen Endlage E2 aus. In einem ersten Funktionsblock 32 ermittelt die Zeitermittlung 19 die für den halben Wischzyklus benötigte Zeit, die in Figur 3 mit Tₙ eingetragen ist. Die Zeitermittlung 19 wird gestartet mit dem Einschaltsignal 17, das dem Elektromotor 10 zugeleitet ist.

In einer ersten Abfrage 33 wird im Vergleicher 21 festgestellt, ob die ermittelte Zeit Tₙ größer (oder gleich) als die ursprüngliche maximal zulässige Zeit T_{max, n} ist. Falls dies nicht zutrifft, wird in einer zweiten Abfrage 34 festgestellt, ob die andere Endlage E2 erreicht wurde. Falls dies nicht zutrifft, wird in der Zeitermittlung 19 die Zeit Tₙ weiter ermittelt und in der ersten Abfrage 33 wieder festgestellt, ob die Zeitbedingung noch erfüllt ist. Falls in der zweiten Abfrage 34 festgestellt wird, daß die andere Endlage E2 des Wischarms 11 erreicht wurde, wird nach einer dritten und einer vierten Zuweisung 35, 36 in der zweiten Zuweisung 31 wieder ein Wischvorgang in entgegengesetzter Richtung durch Umsteuern des Elektromotors 10 ausgelöst.

In der dritten Zuweisung 35 wird der Zähler 24 der Zeitvorgabeanordnung 22 auf Null zurückgesetzt, sofern der Zählerstand von Null abweicht. In der vierten Zuweisung 36 wird die neue maximal zulässige Zeit Tₘₐₓ festgelegt, wobei bei einem ungestörten halben Wischzyklus keine Änderung vorgesehen zu sein braucht. Vorzugsweise kann in der vierten Zuweisung 36 eine Anpassung der maximal zulässigen Zeit Tₘₐₓ vorgesehen sein, welche die tatsächlich benötigte, in der Zeitermittlung 19 festgestellte Zeit Tₙ für einen halben Wischzyklus berücksichtigt. Die maximal zulässige Zeit Tₘₐₓ wird dann derart festgelegt, daß die Zeit Tₙ für einen halben Wischzyklus als Grundlage genommen wird, zu der ein Zeitzuschlag addiert wird, damit die andere Endlage E1, E2 im ungestörten Wischbetrieb stets erreicht werden kann. Der Zeitzuschlag wird von der Zusatzzeitvorgabe 23 bereitgestellt. Die Anzahl der addierten Zeitzuschläge kann in Abhängigkeit vom Stand des Zählers 24 festgelegt sein. Im gezeigten Ausführungsbeispiel wird ein Zeitzuschlag addiert beim Zählerstand Null.

Nach dem Umsteuern des Elektromotors 10 wird der nächste halbe Wischzyklus, ausgehend von der Endlage E2 ausgeführt bis zum erneuten Erreichen der anderen Endlage E1. Während dieses halben Wischzyklus hat die Zeitermittlung 19 im ersten Funktionsblock 32 die Zeit Tₙ₊₁ ermittelt, wobei der Vergleicher 21 eine Zeitüberschreitung nicht festgestellt hat. Nach dem Erreichen der Endlage E1 wird durch Umsteuern des Elektromotors 10 ein weiterer halber Wischzyklus in der zweiten Zuweisung 31, ausgehend von der Endlage E1 ausgelöst. Es wird angenommen, daß in diesem Wischzyklus eine Blockierung an einer ersten Blockierposition B1, beispielsweise durch Schnee, auftritt. In der ersten Abfrage 33 wird vom Vergleicher 21 festgestellt, daß die maximal zulässige Zeit Tₘₐₓ überschritten ist. In Figur 3 ist die maximal zulässige Zeit mit T_{max,n+1} bezeichnet als Hinweis darauf, daß die maximal zulässige Zeit T_{max, n+1} gegebenenfalls aufgrund des letzten vorangegangenen halben Wischzyklus neu festgelegt wurde, der die Zeit Tₙ₊₁ gedauert hat.

Nachdem in der ersten Abfrage 33 von der Zeitermittlung 19 festgestellt wurde, daß die maximal zulässige Zeit T_{max,n+1} aufgrund der Blockierung bei B1 überschritten wurde, wird in einer fünften Zuweisung 37 der Stand des Zählers 24 um 1 erhöht. Anschließend wird in einer sechsten Zuweisung 38 die maximal zulässige Zeit Tₘₐₓ für den nächsten halben Wischzyklus festgelegt. Im gezeigten Ausführungsbeispiel stimmt diese Zeit vorzugsweise mit der zuvor geltenden maximal zulässigen Zeit T_{max, n+1} überein. Obwohl der Zählerstand gemäß der fünften Zuweisung 37 im angezeigten Ausführungsbeispiel jetzt den Wert 1 aufweist, müssen nicht unbedingt zwei von der Zusatzzeitvorgabe 23 bereitgestellte Zeitzuschläge addiert werden. Hier genügt zunächst die Vorgabe eines Zeitzuschlags, wie dies auch der Fall beim Zählerstand Null war, so daß sich wieder exakt die maximal zulässige Zeit T_{max, n+1} ergibt.

In einer nachfolgenden dritten Abfrage 39 wird festgestellt, ob die von der Zeitvorgabeanordnung 22 festgelegte maximal zulässige Zeit Tₘₐₓ für den nächsten halben Wischzyklus größer oder gleich der ursprünglichen maximal zulässigen Zeit T_{max, n} ist. Die Erhöhung der maximal zulässigen Zeit Tₘₐₓ für einen halben Wischzyklus über dieses Maß hinaus ist unnötig und würde lediglich die Wartezeit des Wischarms 11 in einer Blockierposition verlängern.

Falls dies nicht zutrifft, wird zur zweiten Anweisung 31 gegangen, die ein Umsteuern des Elektromotors 10 zum Starten des Rücklaufs in Richtung der Endlage E1 vorsieht. Die Endlage E1 wird nach der Zeit Tₙ₊₂ wieder erreicht. Das Erreichen der Endlage E1 wird in der zweiten Abfrage 34 festgestellt. Der Zähler 24 wird in der dritten Zuweisung 35 gelöscht und in der vierten Zuweisung 36 wird die neue maximal zulässige Zeit Tₘₐₓ für den nächsten halben Wischzyklus festgelegt. Die neue maximal zulässige Zeit wird in Abhängigkeit der in der Zeitermittlung 19 ermittelten Zeit Tₙ₊₂ des letzten unvollständigen halben Wischzyklus festgelegt, wobei die Endlage E1 erreicht wurde. Die neue maximal zulässige Zeit wird auf dem Wert T_{max, n+2} festgelegt. Anschließend wird in der zweiten Zuweisung 31 wieder ein Umsteuern des Elektromotors 10 veranlaßt.

Nach dem Umsteuern des Elektromotors 10, ausgehend von der Endlage E1, wird ein Blockierzustand bei einer zweiten Blockierposition B2 erreicht, wobei eine Überschreitung der maximal zulässigen Zeit T_{max, n+2} in der ersten Abfrage 32 festgestellt wird. Der zuvor gelöschte Zähler 24 wird in der fünften Zuweisung 37 um Eins erhöht. In der nachfolgenden sechsten Zuweisung 38 kann die maximal zulässige Zeit Tₘₐₓ wieder neu festgelegt werden. Da der Zählerstand lediglich Eins beträgt, ist eine Erhöhung der maximal zulässigen Zeit Tₘₐₓ vom derzeit geltenden Wert T_{max, n+2} auf höhere Werte nicht erforderlich. Nach dem Passieren der dritten Abfrage 39 wird in der zweiten Zuweisung 31 wieder ein Umsteuern des Elektromotors 10 bewirkt, das den Wischarm 11 von der Blockierposition B2 wieder zur Endlage E1 in der Zeit Tₙ₊₃ zurückbringt.

Unter der Annahme, daß die Blockierposition B2 mit der Blockierposition B1 im vorangegangenen Schritt übereinstimmt, beträgt die für die Rückführung des Wischers 11 in die Endlage E1 benötigte Zeit Tₙ₊₃ zumindest näherungsweise gleich der Zeit Tₙ₊₂.

Nach dem erneuten Festlegen der maximal zulässigen Zeit T_{max, n+3} wird ein neuer halber Wischzyklus veranlaßt, der den Wischarm 11 bis zu einem Blockierzustand an einer dritten Blockierposition B3 bringt. Die dritte Blockierposition B3 liegt weiter entfernt von der Endlage E1 als die vorangegangenen Blockierpositionen B1, B2. Der Rücklauf zur Endlage E1 dauert die Zeit Tₙ₊₄, die länger ist als die Zeit Tₙ₊₂ und Tₙ₊₃. Entsprechend länger wird deshalb in der vierten Zuweisung 36 die maximal zulässige Zeit T_{max, n+4} für den nächsten halben Wischzyklus festgelegt.

Bei dem in Figur 3 gezeigten Ausführungsbeispiel kann die Endlage E1 trotz einer aufgetretenen Blockierung bei B1, B2, B3 stets erreicht werden, da die maximal zulässige Zeiten, T_{max, n+1}; T_{max, n+2}; T_{max, n+3} jeweils nach dem Eintreten des Blockierens vorüber sind, so daß der Wischarm 11 stets ohne erneute Zeitüberschreitung wieder die Endlage E1 erreichen kann. Tritt nun der Fall auf, daß in einem neu gestarteten halben Wischzyklus die Blockierung vollständig entfällt, dann kann der Fall auftreten, daß der Wischarm 11 umgesteuert wird durch Anlauf der maximal zulässigen Zeit T_{max,} bevor der Wischarm 11 die andere Endlage E1, E2 erreicht hat. Dieser Fall tritt insbesondere dann auf, wenn die zu reinigende Scheibe bereits in dem unvollständigen halben Wischzyklus derart gereinigt wird, daß nach der Umsteuerung des Elektromotors 10 die Reibung so hoch ist, daß die Endlage E1, E2 nicht mehr innerhalb der maximal zulässigen Zeit Tₘₐₓ erreicht werden kann. In dieser Situation macht sich der Zähler 24 vorteilhaft bemerkbar, dessen Zählerstand in der fünften Zuweisung 37 bei einer zuvor in der ersten Abfrage 33 festgestellten Zeitüberschreitung jeweils um Eins erhöht wird. In Abhängigkeit vom Zählerstand kann die maximal zulässige Zeit Tₘₐₓ erhöht werden, um auch in diesem Fall, zumindest in einem der nächsten Wischzyklen, ein sicheres Erreichen der Endlage E1, E2, ohne erneute Zeitüberschreitung sicherzustellen.

Es kann auch eine andere Betriebssituation auftreten, bei der der Zähler 24 sicherstellt, daß bei einem Wegfall der Blockierung ein normales Wischen von Endlage zu Endlage E1, E2 wieder erreicht werden kann. Dieser Fall geht davon aus, daß eine Blockierung beispielsweise bei den Positionen B1, B2, B3 aufgetreten ist und daß anschließend wieder eine Endlage E1, E2 erreicht wurde, so daß für den nächsten halben Wischzyklus eine verkürzte neue maximal zulässige Zeit Tₘₐₓ festgelegt wurde. Wird dann der Wischarm 11 bei seinem erneuten Rücklauf in die gleiche Endlage E1, E2 vor Erreichen der Endlage E1, E2 zusätzlich blockiert, dann stellt die stufenweise Erhöhung der maximal zulässigen Zeit Tₘₐₓ durch Erhöhen des Zählerstandes in der fünften Anweisung 37 sicher, daß bei einem Wegfall, insbesondere der zuerst aufgetretenen Blockierung, wieder eine Endlage E1, E2 oder sofort beide Endlagen E1, E2 erreicht werden können.

In der erfingungsgemäßen Vorrichtung ist auch der Fall berücksichtigt, daß eine solche Blockierung auftritt, bei der sofort keine der Endlagen E1, E2 vom Wischarm 11 mehr erreicht werden kann, so daß eine verkürzte maximal zulässige Zeit T_{max, n+1}; T_{max, n+2}; T_{max, n+3} in der vierten Anweisuung 36 nicht mehr vorgegeben werden kann. Um dennoch eine lange Wartezeit des Wischarms 11 bei Erreichen der Blockierpositionen B1, B2, B3 bis zum Umsteuervorgang zu vermeiden, kann in der sechsten Anweisung 38 eine Reduzierung der maximal zulässigen Zeit vorgenommen werden, wobei aber nicht von einer zuvor ermittelten Zeit ausgegangen werden kann. Beispielsweise könnte die Zeit auf einen Wert festgelegt werden, dem die Hälfte eines halben Wischzyklus entspricht. Eie Erhöhung des Zählerstandes und somit eine Erhöhung der Zusatzzeiten stellen das Erreichen wenigstens eines Endanschlags E1, E2 nach Wegfall der Blockierung sicher.

Bei jeder Zeitüberschreitung der maximal zulässigen Zeit Tₘₐₓ, die in der ersten Abfrage 33 festgestellt wird, würde durch Erhöhen des Zählerstandes in der fünften Zuweisung 37 bald eine unnötig hohe maximal zulässige Zeit Tₘₐₓ in der sechsten Zuweisung 38 vorgegeben. Dies verhindert die dritte Abfrage 39, die sicherstellt, daß die maximal zulässige Zeit Tₘₐₓ nicht über den ursprünglich vorgesehenen Wert der maximal zulässigen Zeit T_{max, n} anwächst. Falls dies aufgetreten sein sollte, wird anschließend in der dritten Zuweisung 35 der Zähler 24 gelöscht, so daß eine Verkürzung der maximal zulässigen Zeit bei der erneuten Festlegung der maximal zulässigen Zeit Tₘₐₓ in der vierten Anweisung 36 möglich ist.

Die dritte Abfrage 39 verhindert auch in dem Fall ein Anwachsen der maximal zulässigen Zeit Tₘₐₓ auf unnötig hohe Werte, bei dem ein zusätzliches Blockieren nach einem ersten Blockieren aufgetreten ist, wobei nach dem ersten Blockieren nochmals eine Endlage E1, E2 erreicht werden konnte und demzufolge eine verkürzte maximal zulässige Zeit Tₘₐₓ festgelegt wurde.

Die dritte Abfrage 39 führt in diesen Fällen zu einem periodischen Reduzieren der Wartezeit des Wischarms 11 an den Blockierpositionen B1, B2, B3. Bei Wegfall der Blockierung kann dann wieder sukzessive zu einem vollständigen halben Wischzyklus zurückgekehrt werden.

Gemäß einer vorteilhaften Weiterbildung der erfindungsgemäßen Vorrichtung ist eine Reduzierung der elektrischen Leistung des Elektromotors 10 bei einer festgestellten Überschreitung der maximal zulässigen Zeit Tₘₐₓ vorgesehen. Die Leistungsreduzierung schont einzelne Komponenten des Antriebs sowie einer Leistungselektronik, insbesondere bei blockiertem Wischarm 11. Bei Wischanlagen mit mehreren vorgebbaren Leistungsstufen kann eine Reduzierung um wenigstens eine Stufe vorgesehen sein.

Eine andere vorteilhafte Weiterbildung sieht vor, daß bei einem festgestellten Blockierzustand und bei einem gegebenenfalls vorgesehenen Erhöhen der Bestromungsdauer des Elektromotors 10 durch Erhöhen des Zählerstandes genügend große Pausenzeiten eingehalten werden, damit der Elektromotor 10 nicht thermisch überlastet wird.

## Patentansprüche

1. Scheibenwischvorrichtung mit wenigstens einem Wischarm, der zwischen Endlagen (E1, E2) von einem in der Drehrichtung änderbaren Elektromotor angetrieben ist, mit einer Zeitermittlung (19), die eine Zeit (Tₙ; Tₙ₊₁; Tₙ₊₂; Tₙ₊₃; Tₙ₊₄) nach dem Auslösen eines Wischvorgangs ermittelt, mit einer Zeitvorgabeanordnung (22) für die Vorgabe einer maximal zulässigen Zeit (Tₘₐₓ; T_{max, n+1}; T_{max, n+2}; T_{max,n+3}), mit einem Vergleicher (21), der die maximal vorgegebene Zeit (Tₘₐₓ; T_{max, n+1}; T_{max, n+2}; T_{max,n+3}) mit der ermittelten Zeit (Tₙ; Tₙ₊₁; Tₙ₊₂; Tₙ₊₃; Tₙ₊₄) vergleicht, und bei einer Überschreitung der maximal zulässigen Zeit (Tₘₐₓ; T_{max, n+1}; T_{max, n+2}; T_{max,n+3}) einen Wischvorgang in entgegengesetzter Richtung auslöst, dadurch gekennzeichnet, daß die Zeitermittlung (19) die Zeit (Tₙ; Tₙ₊₁; Tₙ₊₂; Tₙ₊₃; Tₙ₊₄) bis zum Erreichen einer der Endlagen (E1, E2) ermittelt und daß die maximal zulässige Zeit (Tₘₐₓ; T_{max, n+1}; T_{max, n+2}; T_{max,n+3}) in Abhängigkeit von der ermittelten Zeit (Tₙ; Tₙ₊₁; Tₙ₊₂; Tₙ₊₃; Tₙ₊₄) festgelegt ist.

2. Scheibenwischvorrichtung nach Anspruch 1, dadurch gekennzeichnet, daß zu der ermittelten Zeit (Tₙ; Tₙ₊₁; Tₙ₊₂; Tₙ₊₃; Tₙ₊₄) wenigstens eine von einer Zusatzzeitvorgabe (23) vorgegebene Zusatzzeit addiert wird.

3. Scheibenwischvorrichtung nach Anspruch 1, dadurch gekennzeichnet, daß Zählmittel (24) vorgesehen sind, die nach jedem unvollständigen halben Wischzyklus, bei dem die andere Endlage (E1, E2) nicht erreicht wurde, erhöht und nach Erreichen einer Endlage (E1, E2) zurückgesetzt sind.

4. Scheibenwischvorrichtung nach Anspruch 3, dadurch gekennzeichnet, daß die Anzahl der Zusatzzeiten von der Anzahl der festgestellten Zeitüberschreitungen abhängt.

5. Scheibenwischvorrichtung nach Anspruch 1, dadurch gekennzeichnet, daß die Restwischfeldgröße auf einen minimalen vorgegebenen Wert begrenzt ist.

6. Scheibenwischvorrichtung nach Anspruch 1, dadurch gekennzeichnet, daß ein Schleifring zum Ermitteln der Endlagen (E1, E2) als Endlagensensor (12) vorgesehen ist.

7. Scheibenwischvorrichtung nach Anspruch 1, dadurch gekennzeichnet, daß eine obere Grenze für die maximal zulässige Zeit (Tₘₐₓ; T_{max, n+1}; T_{max, n+2}; T_{max,n+3}) vorgesehen ist.

8. Scheibenwischvorrichtung nach Anspruch 1, dadurch gekennzeichnet, daß eine Reduzierung der elektrischen Leistung des Elektromotors (10) nach einer vom Vergleicher (21) festgestellten Zeitüberschreitung vorgesehen ist.

## Claims

1. Wiper device having at least one wiper arm, which is driven between end positions (E1, E2) by an electric motor of variable direction of rotation, having a time-determining unit (19) which determines a time (Tₙ; Tₙ₊₁; Tₙ₊₂; Tₙ₊₃; Tₙ₊₄) after the initiation of a wiping operation, having a time-prescribing arrangement (22) for prescribing a maximum permissible time (Tₘₐₓ; Tₘₐₓ, ₙ₊₁; Tₘₐₓ, ₙ₊₂; Tₘₐₓ, ₙ₊₃), having a comparator (21) which compares the maximum prescribed time (Tₘₐₓ; Tₘₐₓ, ₙ₊₁; Tₘₐₓ, ₙ₊₂; Tₘₐₓ, ₙ₊₃) with the determined time (Tₙ; Tₙ₊₁; Tₙ₊₂; Tₙ₊₃; Tₙ₊₄) and, in the event of transgression of the maximum permissible time (Tₘₐₓ, Tₘₐₓ, ₙ₊₁; T_{max, n+2}; Tₘₐₓ, ₙ₊₃), initiates a wiping operation in the opposite direction, characterized in that the time-determining unit (19) determines the time (Tₙ; Tₙ₊₁; Tₙ₊₂; Tₙ₊₃; Tₙ₊₄) up to when one of the end positions (E1, E2) is reached, and in that the maximum permissible time (Tₘₐₓ, ₙ₊₁; T_{max, n+2}; T_{max, n+3}) is fixed as a function of the determined time (Tₙ; Tₙ₊₁; Tₙ₊₂; Tₙ₊₃; Tₙ₊₄).

2. Wiper device according to Claim 1, characterized in that at least one additional time prescribed by an additional-time prescribing unit (23) is added to the determined time (Tₙ; Tₙ₊₁; Tₙ₊₂; Tₙ₊₃; Tₙ₊₄).

3. Wiper device according to Claim 1, characterized in that counting means (24) are provided which are incremented after each incomplete half wiping cycle in which the other end position (E1, E2) has not been reached, and are reset after an end position (E1, E2) has been reached.

4. Wiper device according to Claim 3, characterized in that the number of the additional times is a function of the number of the determined time transgressions.

5. Wiper device according to Claim 1, characterized in that the size of the residual wiper field is limited to a minimum prescribed value.

6. Wiper device according to Claim 1, characterized in that a slip ring is provided as end-position sensor (12) for the purpose of determining the end positions (E1, E2).

7. Wiper device according to Claim 1, characterized in that an upper limit is provided for the maximum permissible time (Tₘₐₓ; Tₘₐₓ, ₙ₊₁; Tₘₐₓ, ₙ₊₂; Tₘₐₓ, ₙ₊₃).

8. Wiper device according to Claim 1, characterized in that a reduction in the electric power of the electric motor (10) is provided after a time transgression determined by the comparator (21).

## Revendications

1. Dispositif d'essuie-glace comprenant au moins un bras d'essuie-glace entraîné par un moteur électrique réversible entre deux positions de fin de course (E1, E2),
- un moyen pour déterminer une durée (19) qui détermine une durée (Tₙ, Tₙ₊₁, Tₙ₊₂, Tₙ₊₃; Tₙ₊₄) après le déclenchement d'une opération d'essuyage,
- un dispositif prédéterminant une durée (22) pour prédéterminer une durée maximale autorisée (Tₘₐₓ, T_{max, n+1}, T_{max, n+2}, T_{max, n+3})
- un comparateur (21) qui reçoit la durée maximale prédéterminée (Tₘₐₓ, T_{max, n+1}, T_{max, n+2}, T_{max, n+3}), et les compare à la durée déterminée (Tₙ, Tₙ₊₁, Tₙ₊₂, Tₙ₊₃; Tₙ₊₄) et en cas de dépassement de la durée maximale autorisée (Tₘₐₓ, T_{max, n+1}, T_{max, n+2}, T_{max, n+3}), déclenche une opération d'essuyage en sens opposé,
caractérisé en ce que
le moyen de détermination d'une durée (19) détermine la durée (Tₙ, Tₙ₊₁, Tₙ₊₂, Tₙ₊₃; Tₙ₊₄) jusqu'à atteindre l'une des positions de fin de course (E1, E2) et en ce qu'on fixe la durée maximale autorisée (Tₘₐₓ, T_{max, n+1}, T_{max, n+2}, T_{max, n+3}) selon la durée déterminée (Tₙ, Tₙ₊₁, Tₙ₊₂, Tₙ₊₃; Tₙ₊₄).

2. Dispositif d'essuie-glace selon la revendication 1, caractérisé en ce qu'
on ajoute une durée supplémentaire prédéterminée par un moyen prédéterminant une durée supplémentaire (23) à la durée déterminée (Tₙ, Tₙ₊₁, Tₙ₊₂, Tₙ₊₃; Tₙ₊₄).

3. Dispositif d'essuie-glace selon la revendication 1, caractérisé par
des moyens de comptage (24) qui après chaque demi-cycle d'essuyage incomplet pour lequel on n'est pas arrivé dans les positions de fin course (E1, E2) est augmenté et qui est remis à l'état initial lorsqu'on atteint une position de fin de course (E1, E2).

4. Dispositif d'essuie-glace selon la revendication 3, caractérisé en ce que
le nombre des durées supplémentaires dépend du nombre des déplacements de temps constatés.

5. Dispositif d'essuie-glace selon la revendication 1, caractérisé en ce que
la grandeur du champ d'essuyage résiduel est limitée à une valeur minimale prédéterminée.

6. Dispositif d'essuie-glace selon la revendication 1, caractérisé par
une bague frottante pour définir les positions de fin de course (E1, E2) comme capteurs de position de fin de course (12).

7. Dispositif d'essuie-glace selon la revendication 1, caractérisé par
une limite supérieure pour la durée maximale autorisée (Tₘₐₓ, T_{max, n+1}, T_{max, n+2}, T_{max, n+3}).

8. Dispositif d'essuie-glace selon la revendication 1, caractérisé par
une réduction de la puissance électrique du moteur électrique (10) après un dépassement de temps fixé par un comparateur (21).
